(19) Europäisches Patentamt
European Patent Office
Office européen des brevets

(11) **EP 2 073 043 A2**

(12) **EUROPEAN PATENT APPLICATION**

(43) Date of publication:
**24.06.2009 Bulletin 2009/26**

(51) Int Cl.:
***G01V 1/36*** (2006.01)

(21) Application number: **08172294.4**

(22) Date of filing: **19.12.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **19.12.2007 US 15017 P
17.08.2008 US 193034**

(71) Applicant: **Geco Technology B.V.
2586 BJ S'Gravenhage (NL)**

(72) Inventors:
• **Kjellgren, Per
4024, Stavanger (NO)**

• **Kjellesvig, Bent Andreas
1476, Rasta (NO)**
• **Ozdemir, Ahmet Kemal
1384, Asker (NO)**
• **Teigen, Oeyvind
0253, Oslo (NO)**
• **Borgen, Lars
3070, Sande (NO)**

(74) Representative: **Suckling, Andrew Michael
Marks & Clerk LLP
4220 Nash Court
Oxford Business Park South
Oxford
OX4 2RU (GB)**

(54) **Technique and system to cancel noise in measurements provided by sensors of a multi-component streamer**

(57) A technique includes determining a motion, for example a displacement, of an acoustic sensor while in tow. Based on the determined motion of the sensor, a measurement that is acquired by the sensor is compensated to remove noise from the measurement.

**FIG. 1**

EP 2 073 043 A2

## Description

This application claims the earlier effective filing date of co-pending Provisional U.S. patent application, Ser. No. 61/015,017, with the same title, filed on 19 December 2007, by the same inventors.

BACKGROUND

The invention generally relates to a technique and system to cancel noise in measurements provided by sensors of a multi-component streamer.

Seismic exploration involves surveying subterranean geological formations for hydrocarbon deposits. A survey typically involves deploying seismic source(s) and seismic sensors at predetermined locations. The sources generate seismic waves, which propagate into the geological formations creating pressure changes and vibrations along their way. Changes in elastic properties of the geological formation scatter the seismic waves, changing their direction of propagation and other properties. Part of the energy that is emitted by the sources reaches the seismic sensors. Some seismic sensors are sensitive to pressure changes (hydrophones), others to particle motion (e.g., geophones), and industrial surveys may deploy only one type of sensors or both. In response to the detected seismic events, the sensors generate electrical signals to produce seismic data. Analysis of the seismic data can then indicate the presence or absence of probable locations of hydrocarbon deposits.

Some surveys are known as "marine" surveys because they are conducted in marine environments. However, "marine" surveys may be conducted not only in saltwater environments, but also in fresh and brackish waters. In one type of marine survey, called a "towed-array" survey, an array of seismic sensor-containing streamers and sources is towed behind a survey vessel.

A particular marine survey may involve towing acoustic (i.e., pressure) and particle motion sensors on one or more streamers behind a surface vessel. The towed streamers vibrate, which cause pressure fluctuations that may be recorded as noise in the pressure measurements that are acquired by the acoustic sensors. The vibration may also introduce noise into the measurements that are acquired by the particle motion sensors. The vibration noise may significantly degrade the quality of the pressure and particle motion measurements.

Thus, there exists a continuing need to remove vibration noise from a measurement that is acquired by a towed seismic sensor.

SUMMARY

In an embodiment of the invention, a technique includes determining a motion, for example a displacement, of an acoustic sensor while in tow. Based on the determined motion of the sensor, a measurement that is acquired by the sensor is compensated to remove noise from the measurement.

In another embodiment of the invention, a system includes an interface and a processor. The interface receives first data, which is indicative of a measurement acquired by an acoustic sensor while in tow and second data that is indicative of a motion, for example a displacement, of the sensor. The processor processes the first data based on the second data to remove noise from the measurement.

In another embodiment of the invention, a technique includes obtaining a low frequency pressure measurement that is acquired by an acoustic sensor while in tow. The low frequency measurement is used to estimate a noise in a second measurement that is acquired by a particle motion sensor while in tow such that the second measurement is compensated to remove at least part of the noise.

In yet another embodiment of the invention, a system includes an interface and a processor. The interface receives first data that is indicative of a low frequency pressure measurement that is acquired by an acoustic sensor while in tow and second data that is indicative of a second measurement that is acquired by a particle motion sensor. The processor processes the second data based on the first data to estimate a noise in the second measurement and at least partially remove the noise from the second measurement.

Advantages and other features of the invention will become apparent from the following drawing, description and claims.

BRIEF DESCRIPTION OF THE DRAWING

Fig. 1 is a schematic diagram of a marine seismic data acquisition system according to an embodiment of the invention.

Figs. 2, 4 and 5 are flow diagrams depicting techniques to remove vibration noise from a measurement acquired by an acoustic sensor while in tow according to embodiments of the invention.

Fig. 3 is a schematic diagram illustrating placement of seismic sensors along a streamer according to an embodiment of the invention.

Fig. 6 is a flow diagram depicting a technique to remove low frequency noise from an accelerometer measurement according to an embodiment of the invention.

Fig. 7 is a schematic diagram of a seismic data processing system according to an embodiment of the invention.

DETAILED DESCRIPTION

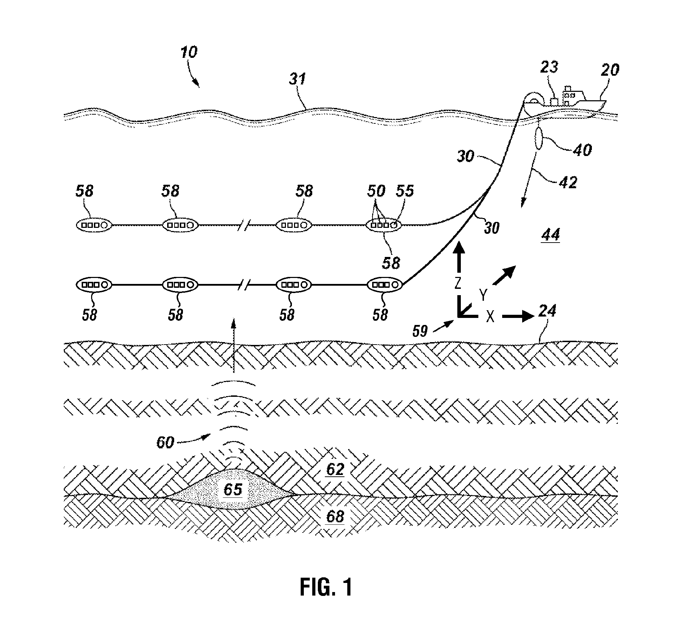

Fig. 1 depicts an embodiment 10 of a marine seismic data acquisition system in accordance with some embodiments of the invention. In the system 10, a survey vessel 20 tows one or more seismic streamers 30 (two exemplary streamers 30 being depicted in Fig. 1) behind the vessel 20. The seismic streamers 30 may be several thousand meters long and may contain various support cables (not shown), as well as wiring and/or circuitry (not shown) that may be used to support communication along the streamers 30.

Each seismic streamer 30 contains seismic sensors, which record seismic signals. In accordance with some embodiments of the invention, the seismic sensors are multi-component seismic sensors 58, each of which is capable of detecting a pressure wave field and at least one component of a particle motion that is associated with acoustic signals that are proximate to or co-located with the multi-component seismic sensor 58. Examples of particle motions include one or more components of a particle displacement, one or more components (inline (x), crossline (y) and vertical (z) components (see axes 59, for example)) of a particle velocity and one or more components of a particle acceleration.

Depending on the particular embodiment of the invention, the multi-component seismic sensor 58 may include one or more hydrophones, geophones, particle displacement sensors, particle velocity sensors, accelerometers, pressure gradient sensors, or combinations thereof.

For example, in accordance with some embodiments of the invention, a particular multi-component seismic sensor 58 may include an acoustic sensor, such as a hydrophone 55, for measuring pressure and three orthogonally-aligned accelerometers 50 to measure three corresponding orthogonal components of particle velocity and/or acceleration near the seismic sensor 58. It is noted that the multi-component seismic sensor 58 may be implemented as a single device (as depicted in Fig. 1) or may be implemented as a plurality of devices, depending on the particular embodiment of the invention.

The marine seismic data acquisition system 10 includes one or more seismic sources 40 (one exemplary source 40 being depicted in Fig. 1), such as air guns and the like. In some embodiments of the invention, the seismic sources 40 may be coupled to, or towed by, the survey vessel 20. Alternatively, in other embodiments of the invention, the seismic sources 40 may operate independently of the survey vessel 20, in that the sources 40 may be coupled to other vessels or buoys, as just a few examples.

As the seismic streamers 30 are towed behind the survey vessel 20, acoustic signals 42 (an exemplary acoustic signal 42 being depicted in Fig. 1), often referred to as "shots," are produced by the seismic sources 40 and are directed down through a water column 44 into strata 62 and 68 beneath a water bottom surface 24. The acoustic signals 42 are reflected from the various subterranean geological formations, such as an exemplary formation 65 that is depicted in Fig. 1.

The incident acoustic signals 42 that are acquired by the sources 40 produce corresponding reflected acoustic signals, or pressure waves 60, which are sensed by the multi-component seismic sensors 58. It is noted that the pressure waves that are received and sensed by the multi-component seismic sensors 58 include "up going" pressure waves that propagate to the sensors 58 without reflection, as well as "down going" pressure waves that are produced by reflections of the pressure waves 60 from an air-water boundary 31.

The multi-component seismic sensors 58 generate signals (digital signals, for example), called "traces," which indicate the acquired measurements of the pressure wave field and particle motion. The traces are recorded and may be at least partially processed by a signal processing unit 23 that is deployed on the survey vessel 20, in accordance with some embodiments of the invention. For example, a particular multi-component seismic sensor 58 may provide a trace, which corresponds to a measure of a pressure wave field by its hydrophone 55; and the sensor 58 may provide one or more traces that correspond to one or more components of particle motion, which are measured by its accelerometers 50.

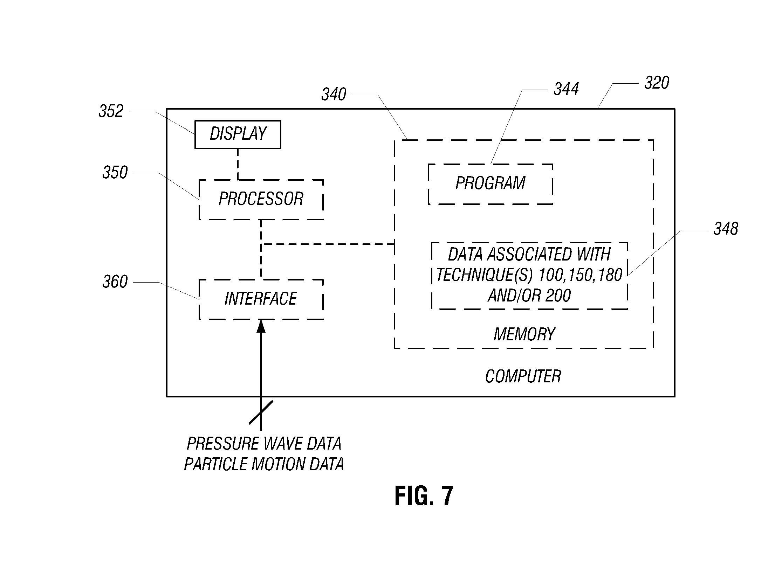

The goal of the seismic acquisition is to build up an image of a survey area for purposes of identifying subterranean geological formations, such as the exemplary geological formation 65. Subsequent analysis of the representation may reveal probable locations of hydrocarbon deposits in subterranean geological formations. Depending on the particular embodiment of the invention, portions of the analysis of the representation may be performed on the seismic survey vessel 20, such as by the signal processing unit 23. In accordance with other embodiments of the invention, the representation may be processed by a seismic data processing system (such as an exemplary seismic data processing system 320 that is depicted in Fig. 7 and is further described below) that may be, for example, located on land or on the vessel 20. Thus, many variations are possible and are within the scope of the appended claims.

The down going pressure waves create an interference known as "ghost" in the art. Depending on the incidence angle of the up going wave field and the depth of the streamer 30, the interference between the up going and down going wavefields creates nulls, or notches, in the recorded spectrum. These notches may reduce the useful bandwidth of the spectrum and may limit the possibility of towing the streamers 30 in relatively deep water (water greater than 20 meters (m), for example).

The technique of decomposing the recorded wave field into up and down going components is often referred to as wave field separation, or "deghosting." The particle motion data that is provided by the multi-component seismic sensors 58 allows the recovery of "ghost" free data, which means data that is indicative of the upgoing wave field.

Towed streamers vibrate, and these vibrations cause pressure fluctuations that are interpreted as noise by the acoustic sensors (hydrophones, for example) that are located on the streamers. Though it is desirable to have as small vibrations as possible, it is difficult to construct a streamer that is vibration free. The vibrations may be caused by various mechanisms, for example vortex shedding, fluid-structure interaction instabilities, waves, etc.

In accordance with embodiments of the invention that are described herein, vibration noise is removed, or cancelled, from a measurement that is acquired by an acoustic sensor based on the displacement of the acoustic sensor during the acquisition of the measurement.

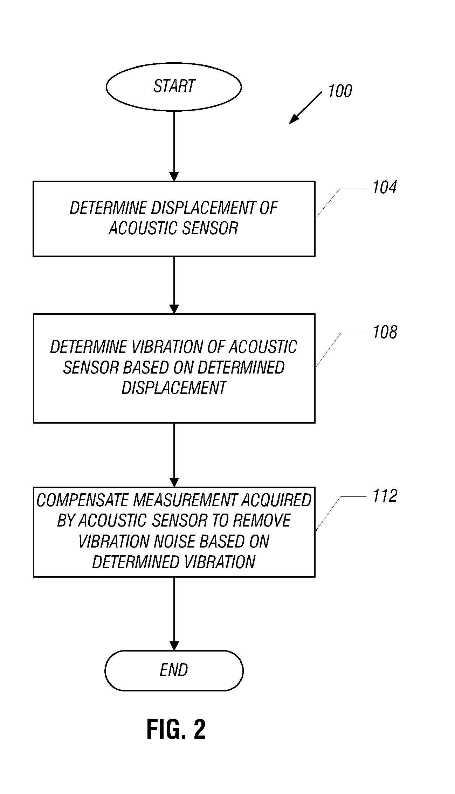

Referring to Fig. 2, more particularly, in accordance with some embodiments of the invention, a technique 100 includes determining (block 104) the displacement of an acoustic sensor, i.e., the displacement of the sensor while acquiring a particular measurement while in tow. The vibration of the sensor is then determined, pursuant to block 108, based on the determined displacement. Based on the determined vibration, the measurement may then be compensated to remove vibration noise from the measurement, pursuant to block 112.

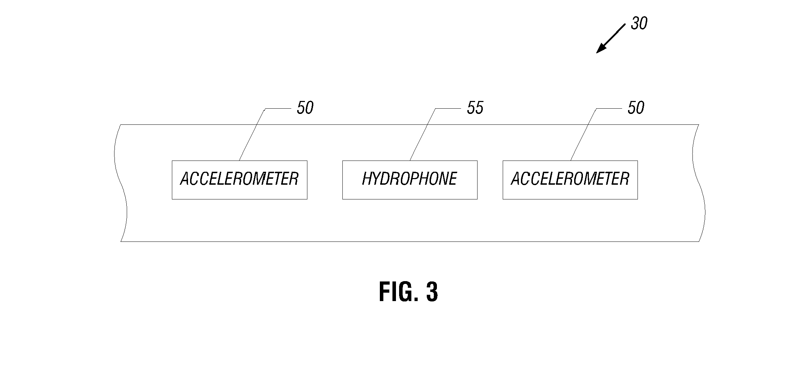

As a more specific example, in accordance with some embodiments of the invention, the displacement of the acoustic sensor may be determined through measurements of the acoustic sensor's motion, which are acquired by accelerometers that are placed in close proximity to the sensor. More particularly, Fig. 3 depicts a portion of an exemplary streamer 30 in accordance with some embodiments of the invention. The streamer 30 includes hydrophones 55 and accelerometers 50, with groups of two or three accelerometers 50 being placed adjacent to each hydrophone 55. In some embodiments of the invention, each accelerometer of the group acquires a measurement of acceleration along one of the three principle axes (i.e., the inline (x), crossline (y) and vertical (z) axes 59 that are depicted in Fig. 1). The acceleration measurements that are acquired by the accelerometers 50 may be integrated for purposes of deriving a displacement of the hydrophone 55.

From the determined displacement of the hydrophone 55, the hydrostatic pressure fluctuations on the hydrophone 55 may be calculated. For example, for motion of the hydrophone 55 along the vertical direction, the corresponding pressure fluctuation may be calculated, pursuant to the following equation:

$$p_{fluctuation} = \rho \cdot g \cdot h, \qquad\qquad \text{Eq. 1}$$

where "$P_{fluctuation}$" represents the calculated hydrostatic pressure fluctuation on the hydrophone 55, "p" represents the density of water; "g" represents the gravitational constant; and "h" represents the peak-to-peak amplitude in the vertical direction of the hydrophone's displacement. A signal corresponding to the pressure fluctuation may then be subtracted from the signal that is acquired by the hydrophone for purposes of removing vibration noise from the hydrophone signal. Vibration noise caused by motion along the other principal axes may be estimated and compensated in a similar manner.

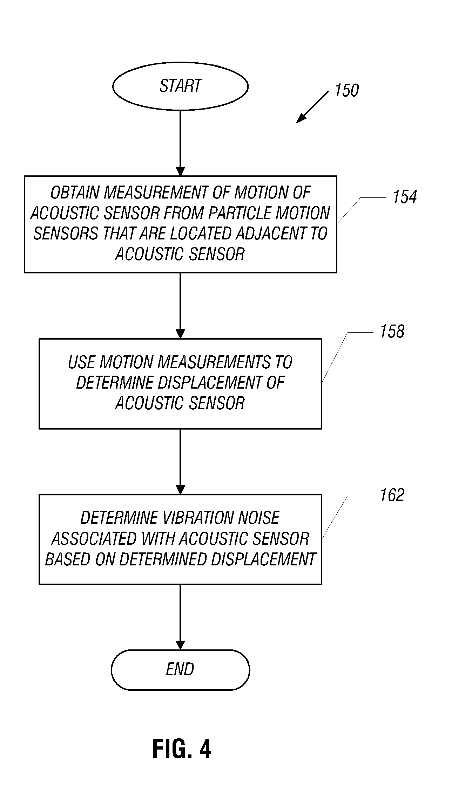

Thus, referring to Fig. 4, in accordance with some embodiments of the invention, a technique 150 includes obtaining a measurement of an acoustic sensor's motion (a hydrophone's motion, for example) from particle motion sensors (accelerometers, for example) that are located adjacent to the acoustic sensor, pursuant to block 154. The motion measurements are then used, pursuant to block 158, to determine the displacement of the acoustic sensor. From the determined displacement, the vibration noise that associated with the acoustic sensor may be determined, pursuant to block 162 and thereafter use to remove vibration noise from a pressure measurement that is acquired by the acoustic sensor.

Other variations are contemplated, which are within the scope of the appended claims. For example, in accordance with other embodiments of the invention, the rotational direction of each acoustic sensor may be monitored via inclinometers that are placed in the streamer 30. From the data that is provided from the inclinometers, the rotational direction of each acoustic sensor 55 is known; and thus, these measurements provide changes in the height positions of each acoustic sensor 55. Thus, the displacement may be directly measured, and the corresponding pressure fluctuations may be determined pursuant to Eq. 1 above.

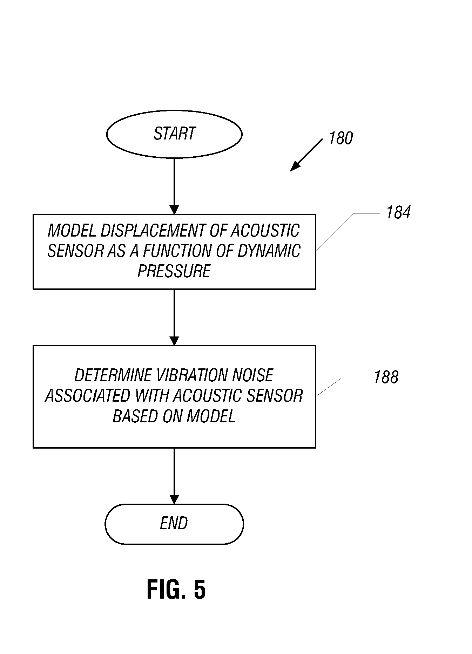

As another variation, the displacement of the acoustic sensor, which is attributable to fluctuating dynamic pressure may be estimated using a model or transfer function. In this regard, referring to Fig. 5, a technique 180 in accordance with an embodiment of the invention includes modeling (block 184) the motion of the acoustic sensor as a function of dynamic pressure. Based on this model, the vibration noise is determined, pursuant to block 188.

More specifically, semi-empirical databases or transfer functions may be created from fluid-structure interaction calculations and experiments, which relate fluctuating dynamic pressure to acceleration and velocities of the hydrophone. The functions may compensate for noise that is caused by vibration in the vertical, horizontal, longitudinal as well as rotational directions.

Instead of particle motion sensors measurements being used to compensate acoustic sensor measurements, acoustic sensor measurements may be used to compensate particle motion measurements in accordance with other embodiments of the invention. More specifically, in accordance with embodiments of the invention, a measurement that is acquired by an acoustic sensor may be used to remove low frequency noise from an accelerometer measurement. This may be especially important when the DC component of the measured acceleration provides the orientation of the accelerometer. If the rotation angle, which corresponds to the orientation of the accelerometer cannot be accurately measured, the fidelity of the particle motion measurement may be degraded after it has been transformed to a global coordinate system.

Therefore, in accordance with embodiments of the invention, a low frequency pressure fluctuation that is measured by an acoustic sensor may be used to estimate the low frequency noise of a measurement that is acquired by a particle motion sensor, such as an accelerometer. It is noted that due to the existence of receiver and source ghost notches, the pressure measurement that is acquired by the acoustic sensor does not indicate the reflected seismic signal at very low frequencies. Therefore, due to the absence of the reflected seismic signal in the pressure measurement at low frequencies, the low frequency pressure variation may be obtained directly from the pressure measurement. After the hydrostatic pressure fluctuation has been measured, an acceleration signal, which corresponds to the noise that is introduced into the accelerometer measurement due to the low frequency pressure fluctuations may be estimated and subtracted from the accelerometer measurement. Thus, this type of correction compensates for additive noise that is present on acceleration measurements at very low frequencies.

One technique to estimate the noise in a particle motion measurement based on an estimated noise in a pressure measurement is disclosed in U.S. Patent Application Serial No. 11/683,873, entitled, "TECHNIQUE AND SYSTEM TO CANCEL NOISE FROM MEASUREMENTS OBTAINED FROM A MULTI-COMPONENT STREAMER," (Attorney Docket No. 14.0334), which was filed on March 8, 2007 and is hereby incorporated by reference in its entirety.

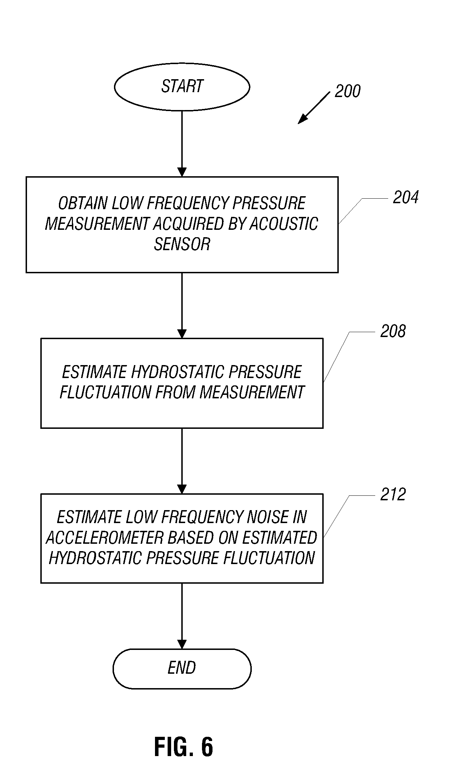

Fig. 6 depicts a technique 200 that may be used in accordance with embodiments of the invention to remove, or cancel, low frequency noise from a particle motion measurement. Pursuant to the technique 200, a low frequency measurement that was acquired by an acoustic sensor is obtained, pursuant to block 204. From this measurement, a hydrostatic pressure fluctuation is estimated, pursuant to block 208. From the estimated hydrostatic pressure fluctuation, the low frequency noise that is present in the accelerometer signal is estimated, as set forth in block 212.

Referring to Fig. 7, in accordance with some embodiments of the invention, a seismic data processing system 320 may perform the techniques that are disclosed herein for purposes of removing noise from pressure and/or particle motion measurements. In accordance with some embodiments of the invention, the system 320 may include a processor 350, such as one or more microprocessors and/or microcontrollers. The processor 350 may be located on a streamer 30 (Fig. 1), located on the vessel 20 or located at the land-based processing facility (as examples), depending on the particular embodiment of the invention.

The processor 350 may be coupled to a communication interface 360 for purposes of receiving seismic data that corresponds to pressure and particle motion measurements. Thus, in accordance with embodiments of the invention described herein, the processor 350, when executing instructions stored in a memory of the seismic data processing system 320, may receive multi-component data that is acquired by multi-component seismic sensors while in tow. It is noted that, depending on the particular embodiment of the invention, the multi-component data may be data that is directly received from the multi-component seismic sensor as the data is being acquired (for the case in which the processor 350 is part of the survey system, such as part of the vessel or streamer) or may be multi-component data that was previously acquired by the seismic sensors while in tow and stored and communicated to the processor 350, which may be in a land-based facility, for example.

As examples, the interface 360 may be a USB serial bus interface, a network interface, a removable media (such as a flash card, CD-ROM, etc.) interface or a magnetic storage interface (IDE or SCSI interfaces, as examples). Thus, the interface 360 may take on numerous forms, depending on the particular embodiment of the invention.

In accordance with some embodiments of the invention, the interface 360 may be coupled to a memory 340 of the seismic data processing system 320 and may store, for example, various data sets involved with the techniques 100, 150, 180 and/or 200, as indicated by reference numeral 348. The memory 340 may store program instructions 344, which when executed by the processor 350, may cause the processor 350 to perform one or more of the techniques that are disclosed herein, such as the techniques 100, 150, 180 and/or 200, as examples.

In accordance with some embodiments of the invention, the system 320 includes a display 352, to display or monitor results obtained via the techniques that are disclosed herein, such as the processed particle motion and/or pressure measurement having the removed noise, for example.

While the present invention has been described with respect to a limited number of embodiments, those skilled in the art, having the benefit of this disclosure, will appreciate numerous modifications and variations therefrom. It is intended that the appended claims cover all such modifications and variations as fall within the true spirit and scope of this present invention.

**Claims**

1. A method of removing noise in acoustic data comprising:

   determining a motion of a towed acoustic sensor; and
   based on the determined motion, compensating a measurement acquired by the acoustic sensor to remove vibration noise from the measurement.

2. The method of claim 1, wherein the noise comprises noise generated due to hydrostatic pressure fluctuations caused by vibration of a cable to which the sensor is attached.

3. The method of claim 1 or 2, wherein the act of determining the motion comprises determining an acceleration of the sensor.

4. The method of claim 3, wherein the act of determining the acceleration comprises obtaining at least one measurement from at least one accelerometer contained in a streamer that also contains the acoustic sensor.

5. The method of claim 1, 2, 3 or 4, wherein the act of compensating comprises:

   estimating the noise from the determined motion

6. The method of any preceding claim, wherein the act of determining the motion comprises:

   obtaining at least one measurement from at least one inclinometer in a streamer that contains the acoustic sensor; and
   determining the motion from said at least one measurement.

7. The method of any preceding claim, wherein the act of determining the motion comprises providing a model that interrelates a motion of the acoustic sensor with a dynamic pressure.

8. A method for removing noises in acoustic data comprising:

   obtaining a low frequency pressure measurement acquired by an acoustic sensor while in tow; and
   based on the low frequency pressure measurement, estimating noise in a second measurement acquired by a particle motion sensor while in tow and compensating the second measurement to at least partially remove the noise.

9. The method of claim 8, wherein the low frequency pressure measurement does not contain any substantial acoustic signal produced by a seismic reflection due to a ghost notch.

10. The method of claim 8 or 9, wherein the particle motion sensor comprises an accelerometer.

11. The method of claim 8, 9 or 10, wherein the act of compensating comprises estimating the low frequency noise based on the low frequency pressure measurement.

12. A system for removing noises in acoustic data comprising:

    an interface to receive first data indicative of a measurement acquired by an acoustic sensor while in tow and second data indicative of a motion of the sensor; and
    a processor to process the first data based on the second data to remove vibration noise from the measurement as in a method of claim 1-11.

13. The system of claim 12, further comprising:

a streamer that contains the acoustic sensor.

**14.** The system of claim 13, wherein the processor is located in the streamer.

**15.** The system of claim 13, further comprising:

a survey vessel to tow the streamer,

wherein the processor is located on the survey vessel.

**FIG. 1**

START

*100*

DETERMINE DISPLACEMENT OF
ACOUSTIC SENSOR — *104*

DETERMINE VIBRATION OF ACOUSTIC
SENSOR BASED ON DETERMINED
DISPLACEMENT — *108*

COMPENSATE MEASUREMENT ACQUIRED
BY ACOUSTIC SENSOR TO REMOVE
VIBRATION NOISE BASED ON
DETERMINED VIBRATION — *112*

END

**FIG. 2**

**FIG. 3**

START

150

OBTAIN MEASUREMENT OF MOTION OF
ACOUSTIC SENSOR FROM PARTICLE MOTION
SENSORS THAT ARE LOCATED ADJACENT TO
ACOUSTIC SENSOR — 154

USE MOTION MEASUREMENTS TO
DETERMINE DISPLACEMENT OF
ACOUSTIC SENSOR — 158

DETERMINE VIBRATION NOISE
ASSOCIATED WITH ACOUSTIC SENSOR
BASED ON DETERMINED DISPLACEMENT — 162

END

**FIG. 4**

EP 2 073 043 A2

FIG. 5

12

START

200

OBTAIN LOW FREQUENCY PRESSURE
MEASUREMENT ACQUIRED BY ACOUSTIC
SENSOR

204

ESTIMATE HYDROSTATIC PRESSURE
FLUCTUATION FROM MEASUREMENT

208

ESTIMATE LOW FREQUENCY NOISE IN
ACCELEROMETER BASED ON ESTIMATED
HYDROSTATIC PRESSURE FLUCTUATION

212

END

FIG. 6

**FIG. 7**

## REFERENCES CITED IN THE DESCRIPTION

**Patent documents cited in the description**

- US 61015017 A

- US 683873 A